# EUROPEAN PATENT SPECIFICATION

(11) **EP 0 740 910 B1**
(45) Date of publication and mention of the grant of the patent: **10.07.2002**
(21) Application number: 96105474.9
(22) Date of filing: 04.04.1996
(51) Int. Cl.: A44B 18/00

(54) **Molded surface fastener and method for manufacturing the same**
Gegossener Flächenhaftverschluss und Herstellungsverfahren
Fermeture à éléments d'accrochage réalisée par moulage et méthode de fabrication

(30) Priority: 02.05.1995 US 433200
(43) Date of publication of application: 06.11.1996
(73) Proprietor: YKK CORPORATION, Chiyoda-ku, Tokyo (JP)
(72) Inventor: Wessels, Roger Thor, Macon, Georgia 31211 (US); Cho, Piljae, Macon, Georgia 31210 (US)
(74) Representative: Patentanwälte Leinweber & Zimmermann

(56) References cited:
- EP-A- 0 265 155
- EP-A- 0 580 073
- EP-A- 0 661 008
- GB-A- 1 166 935
- US-A- 3 196 490
- US-A- 5 260 015

## Description

This invention relates to a surface fastener molded of synthetic resin, comprising: a plate-like substrate sheet and a multiplicity of engaging elements standing from one surface of said plate-like substrate sheet and a coarse mesh sheet being molded and embedded in said plate-like substrate sheet by extrusion or continuous injection.

Furthermore, it relates to a method for continuously manufacturing a molded surface fastener, which is composed of a plate-like substrate sheet and a multiplicity of engaging elements standing on one surface of the substrate sheet, on a circumferential surface of a die wheel having on its circumferential surface a multiplicity of engaging-element-forming cavities. More particularly, the invention relates to a surface fastener in which a coarse mesh sheet is embedded in the plate-like substrate sheet and a method for manufacturing the surface fastener.

In manufacturing a surface fastener, the technology of molding a plate-like substrate sheet and a multiplicity of engaging elements standing on one surface of the plate-like substrate sheet by extrusion and attaching a core sheet to the plate-like substrate sheet during the molding is disclosed in, for example, US-A-5260015. According to the concept disclosed in this publication, molten thermoplastic resin is extruded to a gap between a rotating drum-shape die wheel, in which a multiplicity of mold disks and a multiplicity of spacer plates are laminated alternately, and a press roller, and the core sheet is introduced between the extruded resin and the press roller. As the core sheet is thus introduced, part of the resin is penetrated into the core sheet by the pressing force of the press roller to integrate with the substrate sheet and, at the same time, part of the resin is filled in hook-element-forming peripheral cavities of the die wheel to mold a multiplicity of hook elements. The resulting surface fastener, in which the core sheet is integrally attached to the substrate sheet at its back surface opposite to the engaging surface, is cooled while traveling through a predetermined angle along the circumferential surface of the die wheel following the rotation of the die wheel, whereupon the molded hook elements are pulled out of the cavities and, at the same time, the substrate sheet is continuously peeled off the circumferential surface of the die wheel.

A continuous injection molding method for continuously manufacturing a surface fastener in which yarns are embedded in a plate-like substrate sheet is disclosed in EP-A-0 661 008, which has been published after the priority date of the present invention. The molding method disclosed in this document comprises continuously injecting molten resin from an injection die by a predetermined width onto the circumferential surface of a die wheel, which faces the injection die with a predetermined gap and has a multiplicity of hook-element-forming peripheral cavities and a built-in cooler, continuously introducing a plurality of fiber yarns in the direction of rotation of the die wheel across a molten resin outlet of the die wheel and one or more of the fiber yarns traverse by a predetermined width in parallel to the axis of the die wheel, filling the hook-element-forming cavities with part of the molten resin, while rotating the die wheel in the molten resin extruding direction, to embed the yarns in the plate-like substrate sheet to mold a multiplicity of hook elements on the surface of the plate-like substrate sheet, revolving the molded surface fastener through a predetermined angle along the circumferential surface of the die wheel following the rotation of the die wheel, and taking up the hook elements together with the plate-like substrate sheet by positively peeling them off.

In the surface fastener obtained by the manufacturing method disclosed in the above-mentioned US-A-5 260 015, as is apparent from the object, in an effort to overcome the conventional problem that the conventional type molded surface fastener has a smooth flat back surface so that an adhesive, a cement or the like is difficult to coat over the back surface until the back surface is treated with a special surface treatment, the core sheet is integrally attached to the back surface of the surface fastener to facilitate coating of the adhesive over the back surface and to form a multiplicity of piles or loops as female engaging elements on the back surface. In the resulting surface fastener, the core sheet exists in the plate-like substrate sheet eccentrically to the back-surface side, and part or majority of the plate-like substrate sheet comes out on the back surface.

According to the manufacturing method disclosed in the above-mentioned U S -Patent, the surface fastener in which the core sheet is embedded in the plate-like substrate sheet eccentrically to the back-surface side is revolved through a predetermined angle along the circumferential surface of the die wheel in one-way rotation and is then positively peeled off the circumferential surface of the die wheel under a predetermined tension. In the case of the core-sheet-free surface fastener, since the hook elements molded in the hook-element-forming peripheral cavities of the die wheel have to be positively removed, the plate-like substrate sheet is expanded as a relatively great pulling force is exerted on the plate-like substrate sheet, apart from any deformation of the hook elements.

In the surface fastener manufactured by the method disclosed in the above-mentioned U S -Patent, since the core sheet is embedded in the substrate sheet eccentrically to the back-surface side with synthetic resin impregnated in part of the core sheet, the back-surface side of the substrate sheet increases its rigidness and, at the same time, becomes less deformable against a pulling force. When the surface fastener molded on the circumferential surface of the die wheel is positively peeled off the circumferential surface as conventional, the substrate sheet is less extendible at the back-surface side, where the core sheet exists, and is more extendible at the front-surface side, where the hook elements exist. Therefore, after completion of the molding, the surface fastener has different lengths at the front and back sides so that the surface fastener is curved convexly at the hook-element side and it is difficult to control the coefficient of extension of the front-surface side, thus resulting in a non-uniform density of hook elements. In use, it is not only inconvenient when such surface fastener is attached to object goods, and a constant engagement strength cannot be achieved to impair the quality of product.

On the other hand, in the surface fastener molded according to the above-mentioned EP-A-0 661 008, although it is enough to merely adjust the tension of yarns to be introduced straightly onto the circumferential surface of the die wheel, a traversing mechanism is required to traverse the yarns while being introduced onto the circumferential surface of the die wheel, and it is necessary to control the tension and the traverse width of the yarns with high precision, which makes the manufacturing apparatus complicated to increase the cost of production.

With the foregoing problems in view, it is the object of this invention to provide a high-quality surface fastener which is stable in shape as extrusion or injection molded using a simple molding apparatus without any design change. Furthermore it is strived for to secure an adequate degree of toughness of the hook-element side of a plate-like substrate sheet of the surface fastener and to realize a highly precise density of hook elements.

The invention will be apparent from the following preferred embodiments.

As is described in the above-mentioned EP-A-0 661 008, when a cloth previously woven of warp and weft yarns is embedded in a plate-like substrate sheet while molding the substrate sheet and hook elements, it is premised on that the characteristic of a surface fastener depends on the density of weave. Consequently various kinds of cloths having different weave densities have to be prepared. Because on some occasions users want a cloth resistant against only stretch and on other occasions they want a cloth resistant against only tear, it is not always necessary to give the cloth toughness in both warp and weft directions. The present inventors considered that using the cloth is inconvenient from an economical point of view and so as not to impair the characteristic of a surface fastener.

With continued consideration, the present inventors have found that as long as it does satisfy a particular molding condition, it is possible to embed a core sheet, such as a woven or knitted cloth, non-woven cloth, or a wire net, in the substrate sheet, simultaneously with the molding of the surface fastener, either according to the extrusion molding method disclosed in the above-mentioned U.S. patent or according to the continuous injection molding method disclosed in the above-mentioned EP 0 661 008 A1. The present inventors have also found that it is advantageous to embed in the substrate sheet the core sheet as compared to the yarns.

According to the invention, there is provided a molded surface fastener according to the preamble of claim 1, being characterized in that said preformed coarse mesh sheet has a thickness thinner than that of the substrate sheet and said coarse mesh sheet is embedded over the substantially entire area eccentrically toward said one surface of said plate-like substrate sheet.

If the coarse mesh sheet has a nap raised on its surface, part of the nap penetrates in the substrate sheet to increase the toughness of the hook elements remarkably so that the surface fastener is particularly advantageous when used as a fastener for industrial materials.

If the coarse mesh sheet is colored or patterned, such color or pattern is easy to see through the resin layer as it is embeded in the substrate sheet eccentrically to the hook-element-surface side, so that an artistic product can be obtained without using a highly transparent resin.

The coarse mesh sheet must have adequate pores for the passage of molten resin. Usually, a molten resin pressure of 50 - 150 kg/cm² acts on said sheet during the continous injection. The size of the pores in the sheet which allows the molten resin to smoothly pass through under this resin pressure is preferrably at least 0.05 mm. A desired mesh size may be obtained by changing the weave density and/or woven structure if the sheet is a woven cloth, the knit density and/or knit structure if it is a knitted cloth, the mesh if it is a wire net, and the fiber density if it is a non-woven cloth. The thickness of the coarse mesh sheet is determined by the thickness of the substrate sheet of the surface fastener to be molded and its use; in view of easiness of molding, however, the coarse mesh sheet thickness is preferably 20 - 60 % of the substrate sheet.
Accordingly, the size of yarns, wires or fibers of said sheet may be determined optionally by the required thickness.

If said sheet is composed of fibers and has a nap of a multiplicity of single-fiber on the surface, part of the nap penetrates in the hook elements molded on the substrate sheet surface; in this case, partly since adequate toughness of the substrate sheet is secured and partly since the hook elements have an improved degree of toughness as reinforced by fibers, the surface fastener is particularly suitable when used in industrial materials requiring a higher degree of toughness than conventional.

The surface fastener thus constructed is efficiently manufactured by the following methods.

According to the invention, a method for continously manufacturing a molded surface fastener, which is composed of a plate-like substrate sheet and a multiplicity of engaging elements standing on one surface of the substrate sheet, on a circumferential surface of a die wheel having on its circumferential surface a multiplicity of engaging-element-forming cavities, comprising the steps of: driving the die wheel for one-way rotation; continuously injecting molten resin from a molten resin outlet of an injection die which confronts the die wheel with a predetermined gap therebetween, by predetermined width to the circumferential surface of the die wheel; continuously introducing a coarse mesh sheet into said gap between the die wheel and the molten resin outlet of the injection die to embed the coarse mesh sheet in the molten resin injected from the injection die and to fill the engaging-element-forming cavities with part of the molten resin through the coarse mesh sheet to form the molded surface fastener; positively cooling the circumferential surface of the die wheel by a cooling means to cool the molded surface fastener; and continuously taking up the cooled molded surface fastener from the circumferential surface of the die wheel;
said method being characterized by preparing said preformed coarse mesh sheet to have a thickness thinner that that of said substrate sheet; providing said preformed coarse mesh sheet eccentrically toward said one surface of said substrate sheet; and pulling said engaging elements out of said engaging-element-forming cavities.

According to the invention, a further method for continuously manufacturing a molded surface fastener, which is composed of a plate-like substrate sheet and a multiplicity of engaging elements standing on one surface of the plate-like substrate sheet, on a circumferential surface of a die wheel having on its circumferential surface a multiplicity of engaging-element-forming cavities, said method comprising the steps of: rotating the die wheel and a pressure roller which faces the die wheel with a predetermined gap therebetween, in opposite directions; continuously extruding molten resin from an extrusion nozzle to the gap between the die wheel and the pressure roller; continuously introducing a coarse mesh sheet to embed the coarse mesh sheet in the molten resin and to fill the engaging-element-forming cavities with part of the molten resin through the coarse mesh sheet to form the molded surface fastener; positively cooling the circumferential surface of the die wheel by a cooling means to cool the molded surface fastener; and continuously taking up the cooled molded surface fastener from the circumferential surface of the die wheel by pulling said engaging elements out of said engaging-element-forming cavities said method being characterized by preparing said preformed coarse mesh sheet to have a thickness thinner than that of said substrate sheet; introducing said preformed coarse mesh sheet into a gap between the die wheel and the molten resin extruded from the extrusion nozzle; providing said preformed mesh sheet eccentrically toward said one surface of said substrate sheet.

Preferably, the cooling means is mounted in the die wheel so as to cool the die wheel and the molded surface fastener on the circumferential surface of the die wheel are cooled by a cooler mounted in the die wheel. Further, the molded surface fastener may be cooled by blowing cooling air over the circumferential surface of the die wheel.

The important point to manufacture the surface fastener of this invention is that the coarse mesh sheet having pores for passage of the molten resin is introduced between the die wheel and the molten resin continuously injected from the injection die or extruded from the extrusion nozzle. Namely, although the molten resin is not yet in direct contact with the circumferential surface of the die wheel while the coarse mesh sheet is introduced, part of the molten resin is passed through the pores of the coarse mesh sheet, under the resin pressure or by the pressing force of the press roller during extrusion, to reach the circumferential surface of the die wheel immediately after introduction. At that time, the coarse mesh sheet is forced against the circumferential surface of the die wheel under the resin pressure or by the pressing force of the press roller. Accordingly, the coarse mesh sheet is embedded in the substrate sheet, which molded between the injection die, or the press roller, and the die wheel, necessarily eccentrically to the die wheel side.

Part of the molten resin passed through the coarse mesh sheet is filled in the hook-element-forming cavities of the die wheel to form the hook elements, and part of the molten resin passed through the coarse mesh sheet fills the gap between the circumferential surface of the die wheel and the coarse mesh sheet to fuse with the molten resin on the back-surface or hook-element-free side and the components of the coarse mesh sheet to form the substrate sheet. The thickness of the thus molded substrate sheet is determined by the gap between the injection die and the die wheel in the case of continuous injection molding or by the gap between the die wheel and the press roller in the case of extrusion molding.

The coarse mesh sheet embedded in the substrate sheet eccentrically to the hook-element-surface side serves to assist in peeling the molded surface fastener off the die wheel. Namely, because the coarse mesh sheet exists in the substrate sheet eccentrically toward the hook-element-surface side, the die-wheel side of the substrate sheet is less extendible than the back-surface or hook-element-free side and is highly resistant against pull. Therefore, the pulling force acts effectively on the molded hook elements in the circumferential cavities of the die wheel so that the molded hook elements can e pulled out of the cavities without difficulty. Since the hook-element-side surface of the substrate sheet is not very extended, there occurs no difference in extension between the front and back sides of the substrate sheet so that the surface fastener does not become curved in one direction after molding and the hook elements are distributed uniformly, thus a high-quality surface fastener which is uniform in engaging strenght is produced.

In this connection it is to be noted that from US-A-3,196,490 a method for continuously manufacturing a molded surface fastener is already known, which is also composed of a plate-like substrate sheet and a multiplicity of engaging elements standing on a surface of the substrate sheet. With this known method the substrate sheet is inpregnated by the resin throughout all thickness thereof whereas in the inventive method the coarse mesh sheet is only eccentrically embedded in the substrate sheet. Due to this different manner of such impregnation according to the invention, since the mesh sheet is provided only partially in thickness direction of the substrate sheet, the substrate can maintain its flexibility of resin to some extend, whereas in the known method the rigidity of the substrate sheet of the surface fastener would increase to deteriorate its flexibilty. Furthermore, it is to consider that in the non-molding machine there are cavities in the die wheel which are defined by plates. At the time of removing the molded hooks out of the cavities the plates are separated to open the mold. Therefore the hooks are removed out of the cavities without any effort. This means that there should be no special pulling force exerted on the hooks and the substrate sheet in the direction perpendicular to the sheet surface. With the method according to the invention the hooks are removed out of the hook-forming cavities utilizing its plastic deformation by exerting a pulling force on the hooks and the substrate sheet in the direction perpendicular to the sheet surface. At that time, in case of conventional surface fastener in which a sheet member is provided only on the back side of the substrate sheet, the degree of extension differs between its front and back sides, which may cause the substrate sheet to curve convexly at the hook-element side and also to have uneven hook density. According to the invention, the coarse mesh sheet being embeded in the substrate sheet eccentrically toward the hook-element side, so that even when the pulling force exerts at the time of peeling, the degree of extension can be almost the same between the front and the back sides. Therefore, the problems as described above can be avoided by providing the mesh sheet eccentrically toward the hook-element side.

### BRIEF DESCRIPTION OF THE DRAWINGS

Fig. 1 is a fragmentary vertical cross-sectional view of a molded surface fastener manufacturing apparatus for carrying out a first embodiment of this invention;
Fig. 2 is a fragmentary, enlarged cross-sectional view of the surface fastener manufactured by the first embodiment;
Fig. 3 is a cross-sectional view showing the entire molded surface fastener; and
Fig. 4 is an enlarged cross-sectional view of an example of molded surface fastener in which a coarse mesh sheet of the surface fastener has a nap on only one surface;
FIG. 5 is a fragmentary vertical cross-sectional view of a molded surface fastener manufacturing apparatus for carrying out a second embodiment of this invention.

Preferred embodiments of this invention will now be described in detail with reference to the accompanying drawings.

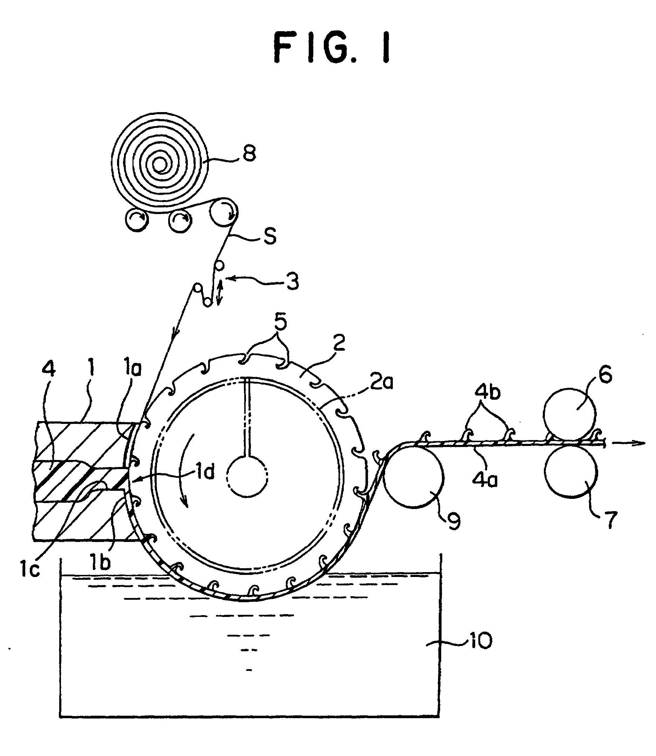

FIG. 1 is a fragmentary vertical cross-sectional view shoving the manner in which a molded surface fastener is manufactured by a continuous injection molding method according to a first embodiment of this invention. In this embodiment, engaging elements to be molded on a plate-like substrate sheet are hook elements.

In FIG. 1, reference numeral 1 designates an injection die. An upper half surface of the distal end of the injection die is an arcuate surface 1a substantially equal in curvature to a below-described die wheel 2, and a lower half surface is an arcuate surface 1b having such a curvature as to define a predetermined gap with respect to the curved surface of the die wheel 2. The injection die 1 is a T-shape die having a resin extrusion outlet 1d which is situated centrally of the upper and lower arcuate surfaces 1a, 1b and from which molten resin 4 is to be extruded in a sheet form under a predetermined molten resin pressure. In this embodiment, the injection die 1 has a single molten resin runner 1c centrally.

The die wheel 2 has a circumferential surface partially adjacent to the upper arcuate surface 1a of the injection die 1 and is spaced from the lower arcuate surface 1b by a predetermined gap, with its axis parallel to the extrusion outlet 1d of the injection die 1. According to the illustrated example, a multiplicity of hook-element-forming cavities 5 are formed on the circumferential surface of the die wheel 2. The structure of the die wheel 2 is substantially identical with the structure disclosed in U.S. Pat. No. 4,775,310 and is hence described here only in brief. The die wheel 2 is in the form of a hollow drum having a water cooling jacket 2a, and along the axis of the hollow drum a multiplicity of mold disks and a multiplicity of spacer plates are laminated alternately. Each of the mold disks has on the front and back side peripheral edges a multiplicity of hook-element-forming cavities 5 with their bases opening to the circumferential surface of the mold disk. Each of the spacer plates has on both of the front and back sides flat surfaces. The die wheel 2 is driven, by a non-illustrated known synchronous drive unit, to rotate in a direction indicated by an arrow.

A coarse mesh sheet S drawn from a roll 8 is introduced between the upper arcuate surface 1a of the injection die 1 and the circumferential surface of the die wheel 2 via a tension adjuster 3 after contacting part of the circumferential surface of the die wheel 2. In this embodiment, a cooling water tank 10 is situated under the die wheel 2 whose lower portion is soaked in the cooling water tank 10. A guide roller 9 is situated diagonally upwardly in front of the cooling water tank 10, and a set of upper and lower take-up rollers 6, 7 rotating at a speed slightly higher than the rotating speed of the die wheel 2 are situated forwardly of the guide roller 9.

The coarse mesh sheet S to be used in this invention may be a coarse mesh woven fiber cloth, a coarse mesh knitted fiber cloth, a wire net with a predetermined mesh, a non-woven cloth with great porosity or a synthetic resin film with a multiplicity of pores in a predetermined pattern. In the case of fiber coarse mesh sheet, fiber is made of thermoplastic resin such as nylon, polyester and polypropylene. Although the thermoplastic synthetic resin for the surface fastener and fiber materials are preferably the same, they may be different. The size of the fibers, fiber yarns or metal wires of the coarse mesh sheet is determined by the required thickness of the coarse mesh sheet. Further, the thickness of the coarse mesh sheet, which is determined depending on the thickness of the substrate sheet 4a of the surface fastener, is usually preferably 20 - 60% of the thickness of the substrate sheet 4a. In compliance with the resin material to be used, the molten resin temperature, molten resin pressure, die wheel temperature and rotational speed of the die wheel are adjusted as a matter of course. The required molten resin pressure is usually in the range of 50 - 150 km/cm², preferably 80 - 110 kg/cm².

For molding the surface fastener of this invention on the apparatus, the molten resin 4 to be continuously injected from the injection die 1 at a predetermined molten resin pressure is continuously forced into the gap between the injection die 1 and the rotating die wheel 2. At the same time, part of the molten resin is extruded onto the circumferential surface of the die wheel 2 via the pores of the coarse mesh sheet S introduced into the above-mentioned gap along the circumferential surface of the die wheel 2 so that the molten resin 4 is filled in the hook-element-forming cavities 5 successively to form hook elements 4b as the molten resin 4 is expanded uniformly over the circumferential surface of the die wheel 2. As a result, the molten resin remaining on the injection outlet 1d of the injection die 1 and the expanded molten resin 4 are fused with the component material of the coarse mesh sheet S to form the substrate sheet 4a having a predetermined thickness.

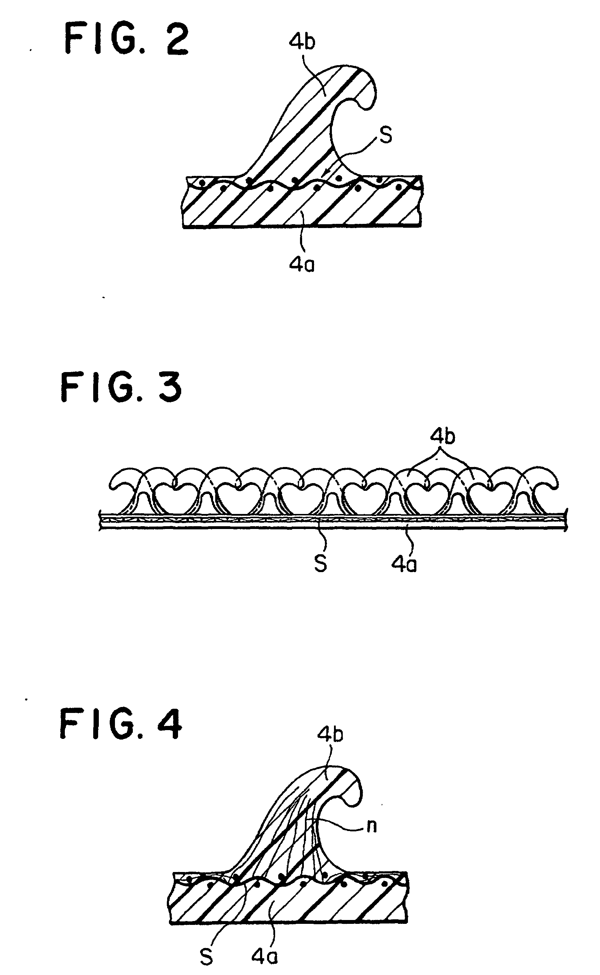

During this molding, the coarse mesh sheet S keeps travelling around the circumferential surface of the die wheel 2 as it is forced thereagainst under the molten resin pressure. Therefore, in the manufacturing method of this invention, it is unnecessary to intentionally force the coarse mesh sheet S against the circumferential surface of the die wheel 2 while introducing. Namely, merely by introducing the coarse mesh sheet S into the above-mentioned gap with a tension enough to avoid slack, the coarse mesh sheet S is necessarily forced against the circumferential surface of the die wheel 2 so that the coarse mesh sheet S is embedded in the substrate sheet 4a of the molded surface fastener eccentrically to the hook-element-surface side or front-surface side as shown in FIG. 2. It is therefore unnecessary to use complicated devices for precise control and for traverse width control, which are used in EP-A-0 661 008. As a tension adjusting section 3, a simple tension controller, such as a dancer roller, enough to keep the coarse mesh sheet free of slack suffices. As a matter of course, a precise tension adjustment may be made on the coarse mesh sheet, if necessary.

The molten resin 4 shaped into the surface fastener on the circumferential surface of die wheel 2 travels around substantially a half of the circumferential surface of the die wheel 2 as guided by the guide roller 9. During that time, the molten resin 4 is cooled from the inside of the die wheel 2 and is further cooled while passing through the cooling water tank 10 so that the substrate sheet 4a, in which the coarse mesh sheet S is embedded, and the hook elements 4b become gradually hard. When the substrate sheet 4a is positively taken up horizontally by the take-up rollers 6, 7 during this hardening, as the coarse mesh sheet S is embedded in the substrate sheet 4a eccentrically to the hook-element-surface side, the coarse mesh-sheet-embedded-side surface of the substrate sheet 4a does not extend even if it is pulled away from the circumferential surface of the die wheel 2, so that the front and back surfaces of the substrate sheet 4a have no difference of extension, thereby making the surface fastener free from curving in one direction after removed from the die wheel 2. Accordingly, a uniform density of hook elements which brings the uniform engaging strength can be achieved over the entire surface of the surface fastener, and the individual hook elements 4b can be pulled out of the cavities 5 smoothly as they resiliently deform. Immediately after being removed off the die wheel 2, the hook elements 4b restore its original shape to become hard completely and, as a result, the surface fastener having the shape shown in FIG. 3 is molded.

In this embodiment, in order to peel the molded resin product (i.e. the surface fastener with the coarse mesh sheet embedded in the substrate sheet) off the die wheel 2, the upper and lower take-up rollers 6, 7 synchronuously rotating in opposite directions are used. The circumferential surfaces of these take-up rollers 6, 7 may be smooth, but preferably, they may have circumferential grooves for receiving the hook elements 4b so as not to damage them. The rotational speed of the take-up rollers 6, 7 is slightly higher than the rotational speed of the die wheel 2 so that the hook elements 4b can be removed smoothly off the hook-element-forming cavities 5.

In the thus manufactured surface fastener, since the coarse mesh sheet S is embedded in the substrate sheet 4a eccentrically to the hook-element-surface side, it is possible to give the substrate sheet 4a adequate toughness both longitudinally and transversely so that uniform-quality products can be obtained as mentioned above. In the resulting surface fastener, no stretch occurs during cutting under tension, and no breakage of a sewing needle occurs during sewing.

In case the coarse mesh sheet S is made of fiber and it has a nap n raised on its surface, part of the nap n penetrates the hook elements to increase the toughness of the hook elements remarkably so that the surface fastener of this invention is particularly advantageous when used as a fastener for industrial materials. Further, if the coarse mesh sheet S is colored or patterned, such color or pattern is easy to see through the resin layer as it is embedded in the substrate sheet eccentrically to the hook-element-surface side, so that an artistic product can be obtained without using a highly transparent resin. If the coarse mesh sheet is made of wire net, a static discharge effect can be expected as the wire net is embedded in the substrate sheet 4a near to the hook-element-side surface. In such an event, magnetic attractivity also is increased if the companion engaging elements are made of magnetic material. Further, with the wire net embedded in the substrate sheet 4a, electromagnetic wave can be cut off, and moreover, it is also possible to deform the surface fastener and maintain its shape.

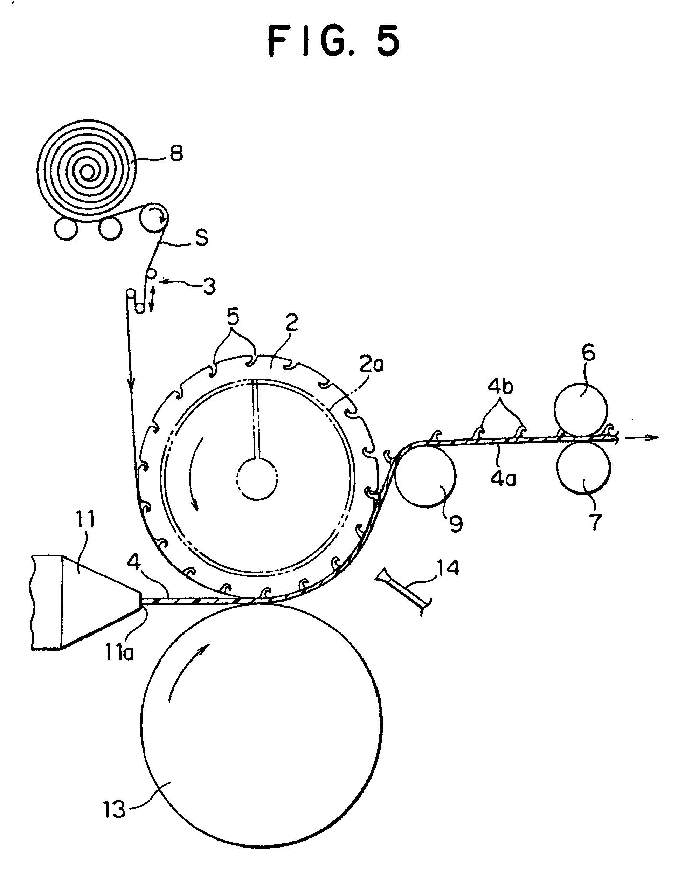

FIG. 5 is a vertical cross-sectional view of an apparatus for manufacturing a surface fastener of a second embodiment of this invention by extrusion molding.

In the second embodiment, an extrusion nozzle 11 is used to substitute for the injection die 1, and a press roller 13 is situated under the die wheel 2 with a predetermined gap. A molten resin extrusion outlet 11a of the extrusion nozzle 11 is situated to face the gap between the die wheel 2 and the press roller 13. These three members are substantially identical in structure with those disclosed in US-A-5 260 015, and their detailed description is omitted here.

In this embodiment, the most important point is that the coarse mesh sheet S is introduced into the gap between the circumferential surface of the die wheel 2 and the molten resin 4 extruded from the extrusion nozzle 11. Namely, in the illustrated example, the coarse mesh sheet S drawn from a roll 8 is introduced between the circumferential surface of the die wheel 2 and the molten resin 4, which is extruded from the molten resin extrusion outlet 11a of the extrusion nozzle 11, via the tension adjusting section 3 after partially contacting the circumferential surface of the die wheel 2. Further, a cooling water jacket 2a for cooling the circumferential surface of the die wheel 2 from the inside is situated in the die wheel 2, and a cooling air blower 14 is situated for blowing cooling air to the circumferential surface of the die wheel 2 having passed the pressing surface of the press roller 13. The die wheel 2 and the press roller 13 are driven, by a non-illustrated drive unit, to synchronously rotate in opposite directions as indicated by an arrow in FIG. 5.

A guide roller 9 is situated diagonally upwardly of the cooling air blower 14, and a set of upper and lower take-up rollers 6, 7 rotating at a speed slightly higher than the rotational speed of the die wheel 2 are situated forwardly of the guide roller 9.

According to the thus constructed apparatus, the molten resin 4 extruded from the extrusion nozzle 11 is introduced to the gap between the press roller 13 and the coarse mesh sheet S, which is introduced along the circumferential surface of the die wheel 2, to be forced through the pores of the coarse mesh sheet 13 to the circumferential surface of the die wheel 2 by the pressing force of the press roller 13. Part of the extruded molten resin 4 is filled in the hook-element-forming cavities 5 of the circumferential surface of the die wheel 2 to form the hook elements 4b, and at the same time, part of the extruded molten resin 4 is distributed between the die wheel 2 and the coarse mesh sheet S so that the molten resin 4 on the hook-element-surface side of the coarse mesh sheet S and the molten resin 4 on the back-surface side are fused together over the entire area to form the substrate sheet 4a. The thus molded surface fastener of this invention travels along substantially a quarter of the die wheel 2 and is then continuously removed off the circumferential surface of the die wheel 2 as positively taken up by the take-up rollers 6, 7 via the guide roller 9. Meanwhile, the molded surface fastener is gradually cooled by the cooling water jacket 2a in the die wheel 2 and is further cooled by air blown from the cooling air blower 14, thus becoming hard. In this embodiment, the coarse mesh sheet S to be introduced to the gap between die wheel 2 and the press roller 13 is previously heated to eliminate any difference in temperature from the semimolten high-temperature substrate sheet 4a so that their fusion can be more reliable.

In the first and second embodiments, the individual hook element 4b has a reinforcing rib 4c on each of opposite side surfaces as shown in FIG. 3. The individual hook elements 4b are oriented in a common direction in the same row and are oriented in opposite directions in adjacent rows. The reinforcing ribs 4c, which may be omitted, are effective in preventing the hook elements 4b from falling sideways. In this invention, adjacent hook elements 4b in the same row may be oriented alternately in opposite directions. With this arrangement, a surface fastener which is not directional in engaging force can be obtained.

As is apparent from the foregoing detailed description, according to the method of this invention, it is possible to continuously manufacture a molded surface fastener in which the coarse mesh sheet S is embedded in the substrate sheet 4a eccentrically to the hook-element-surface side in a single molding step rather than in a plurality of meticulous molding steps, and the obtained surface fastener can secure adequate toughness in longitudinal and transverse directions simultaneously. Further, during the molding, there is no extension difference between the front and back surfaces of the substrate sheet 4a when the surface fastener is peeled off the circumferential surface of the die wheel 2, and therefore the density of hook elements 4b would be uniform over the entire area so that high-quality products excellent in size precision and having a uniform engaging strength can be achieved.

If the coarse mesh sheet S is colored or patterned, such a pattern or color can be seen through clearly as the coarse mesh sheet S exists in the substrate sheet 4a eccentrically to the front-surface side, without using a highly transparent material as the molding resin 4. If the coarse mesh sheet S has the nap n raised on at least the front surface, the toughness of the hook elements 4b can be increased remarkably as part of the nap n penetrates the hook elements 4b and is fused therewith, thus making the surface fastener most suitable for an industrial material fastener.

## Claims

1. A surface fastener molded of synthetic resin, comprising:
(a) a plate-like substrate sheet (4a); and
(b) a multiplicity of hook elements (4b) standing from one surface of said plate-like substrate sheet (4a), and
(c) a coarse mesh sheet (S) being molded and integrally embedded in said plate-like substrate sheet (4a) by extrusion or continuous injection,
said molded surface fastener being **characterized in that** said preformed coarse mesh sheet (S) has a thickness thinner than that of the substrate sheet (4a) and said coarse mesh sheet (S) is embedded over the substantially entire area eccentrically toward said one surface of said plate-like substrate sheet (4a).

2. A molded surface fastener according to claim 1, said surface fastener being **characterized by** that said coarse mesh sheet (S) is a knitted or woven sheet.

3. A molded surface fastener according to claim 1, said surface fastener being **characterized by** that said coarse mesh sheet (S) is a non-woven cloth.

4. A molded surface fastener according to claim 1, said surface fastener being **characterized by** that said coarse mesh sheet (S) is a wire net.

5. A molded surface fastener according to claim 1, said surface fastener being **characterized by** that said coarse mesh sheet (S) has a nap (n) raised on its surface and partly penetrating said hook elements (4b).

6. A molded surface fastener according to claim 1, said surface fastener being **characterized by** that said coarse mesh sheet (S) is colored and/or patterned.

7. A method for continuously manufacturing a molded surface fastener, which is composed of a plate-like substrate sheet (4a) and a multiplicity of hook elements (4b) standing on one surface of a substrate sheet (4a), on a circumferential surface of a die wheel (2) having on its circumferential surface a multiplicity of hook-element-forming cavities (5), comprising the steps of:
(a) driving the die wheel (2) for one-way rotation;
(b) continuously injecting molten resin (4) from a molten resin outlet (1d) of an injection die (1), which confronts the die wheel (2) with a predetermined gap therebetween, by a predetermined width to the circumferential surface of the die wheel (2);
(c) continuously introducing a coarse mesh sheet (S) into said gap between the die wheel (2) and the molten resin outlet (1d) of the injection die(11) to embed the coarse mesh sheet (S) in the molten resin (4) injected from the injection die (1) and to fill the hook-element-forming cavities (5) with part of the molten resin (4) through the coarse mesh sheet (S) to form the molded surface fastener;
(d) positively cooling the circumferential surface of the die wheel (2) by a cooling means to cool the molded surface fastener; and
(e) continuously taking up the cooled molded surface fastener from the circumferential surface of the die wheel (2);
said method being **characterized by**
(f) preparing said preformed coarse mesh sheet (S) to have a thickness thinner than that of said substrate sheet (4a);
(g) providing said preformed coarse mesh sheet (S) eccentrically toward said one surface of said substrate sheet (4a); and
(h) pulling said hook elements (4b) out of said hook-element-forming cavities (5).

8. A molded surface fastener manufacturing method according to claim 7, said method being **characterized by** that said cooling means is mounted in the die wheel (2) so as to coot the circumferential surface of the die wheel (2).

9. A molded surface fastener manufacturing method according to claim 7, said method being **characterized by** further comprising the step of cooling part of the die wheel (2) and the surface fastener travelling following the rotation of the die wheel (2) in a cooling water tank (10) as they pass simultaneously through said tank (10).

10. A method for continuously manufacturing a molded surface fastener, which is composed of a plate-like substrate sheet (4a) and a multiplicity of hook elements (4b) standing on one surface of the plate-like substrate sheet (4a), on a circumferential surface of a die wheel (2) having on its circumferential surface a multiplicity of hook-element-forming cavities (5), said method comprising the steps of:
(a) rotating the die wheel (2) and a pressure roller (13) which faces the die wheel (2) with a predetermined gap therebetween, in opposite directions;
(b) continuously extruding molten resin (4) from an extrusion nozzle (11) to the gap between the die wheel (2) and the pressure roller (13);
(c) continuously introducing a coarse mesh sheet (S) to embed the coarse mesh sheet (S) in the molten resin (4) and to fill the hook-element-forming cavities (5) with part of the molten resin (4) through the coarse mesh sheet (S) to form the molded surface fastener;
(d) positively cooling the circumferential surface of the die wheel (2) by a cooling means to cool the molded surface fastener; and
(e) continuously taking up the cooled molded surface fastener from the circumferential surface of the die wheel (2) by pulling said hook elements (4b) out of said hook-element-forming cavities (5)
said method being **characterized by**
(f) preparing said preformed coarse mesh sheet (S) to have a thickness thinner than that of said substrate sheet (4a);
(g) introducing said preformed coarse mesh sheet (S) into a gap between the die wheel (2) and the molten resin (4) extruded from the extrusion nozzle (11);
(h) providing said preformed coarse mesh sheet (S) eccentrically toward said one surface of said substrate sheet (4a).

11. A molded surface fastener manufacturing method according to claim 10, said method being **characterized by** that said cooling means is mounted in the die wheel (2) so as to cool the circumferential surface of the die wheel (2).

## Patentansprüche

1. Aus Kunstharz formgegossener Flächenhaftverschluss, welcher aufweist:
(a) eine plattenartige Trägermaterialbahn (4a);
(b) eine Vielzahl von Hakenelementen(4b), die von der einen Seite der plattenartigen Trägermaterialbahn (4a) vorstehen, und
(c) eine grobmaschige Materialbahn (S), die in die plattenartige Trägermaterialbahn (4a) durch Extrudieren oder kontinuierliches Spritzgießen formgegossen und in integraler Weise eingebettet ist,
wobei der formgegossene Flächenhaftverschluss **dadurch gekennzeichnet ist, dass** die Dicke der vorgeformten grobmaschigen Materialbahn (S) geringer ist als die der Trägermaterialbahn (4a) und die grobmaschige Materialbahn (S) in exzentrischer Weise in Richtung der einen Fläche der plattenartigen Trägermaterialbahn (4a) eingebettet ist.

2. Formgegossener Flächenhaftverschluss nach Anspruch 1, wobei der Flächenhaftverschluss **dadurch gekennzeichnet ist, dass** die grobmaschige Materialbahn (S) eine gewirkte oder gewebte Materialbahn ist.

3. Formgegossener Flächenhaftverschluss nach Anspruch 1, wobei der Flächenhaftverschluss **dadurch gekennzeichnet ist, dass** die grobmaschige Materialbahn (S) ein Textilvlies ist.

4. Formgegossener Flächenhaftverschluss nach Anspruch 1, wobei der Flächenhaftverschluss **dadurch gekennzeichnet ist, dass** die grobmaschige Materialbahn (S) ein Drahtnetz ist.

5. Formgegossener Flächenhaftverschluss nach Anspruch 1, wobei der Flächenhaftverschluss **dadurch gekennzeichnet ist, dass** die grobmaschige Materialbahn (S) einen Flor (n) aufweist, der von dessen Oberfläche vorsteht und die Hakenelemente (4b) teilweise durchdringt.

6. Formgegossener Flächenhaftverschluss nach Anspruch 1, wobei der Flächenhaftverschluss **dadurch gekennzeichnet ist, dass** die grobmaschige Materialbahn (S) gefärbt und/oder gemustert ist.

7. Verfahren zur kontinuierlichen Fertigung eines formgegossenen Flächenhaftverschlusses, welcher aus einer plattenartigen Trägermaterialbahn (4a) und einer Vielzahl von Hakenelementen (4b) besteht, die auf der einen Fläche einer Trägermaterialbahn (4a) stehen, wobei ein Matrizenrad (2) auf seiner Umfangsfläche eine Vielzahl von Hakenelement ausbildenden Hohlräumen (5) aufweist, und das Verfahren folgende Schritte umfasst:
(a) Antreiben des Matrizenrades (2) für eine Drehung in einer einzigen Richtung;
(b) Kontinuierliches Einspritzen von formgegossenem Kunstharz (4) aus einem Kunstharzschmelzen-Auslass (1d) einer Einspritzdüse (1), welche dem Matrizenrad (2) mit einem vorbestimmten Spalt zu diesem gegenüberliegt, welcher zur Umfangsfläche des Matrizenrades (2) eine vorbestimmte Breite aufweist;
(c) kontinuierliches Einführen eines grobmaschigen Bahnmaterials (S) in den Spalt zwischen dem Matrizenrad (2) und dem Kunstharzschmelzen-Auslass (1d) der Einspritzdüse (11), um die grobmaschige Materialbahn (S) in das aus der Einspritzdüse (1) eingespritzte geschmolzene Kunstharz (4) einzubetten und die Hakenelement ausbildenden Hohlräume (5) mit einem Teil des geschmolzenen Kunstharzes (4) durch die grobmaschige Materialbahn (S) hindurch zu füllen, um den formgegossenen Flächenhaftverschluss formzugießen;
(d) Zwangskühlen der Umfangsfläche des Matrizenrades (2) durch eine Kühleinrichtung, um den formgegossenen Flächenhaftverschluss zu kühlen; und
(e) kontinuierliches Abwickeln des abgekühlten formgegossenen Flächenhaftverschlusses von der Umfangsfläche des Matrizenrades (2);
wobei das Verfahren **dadurch gekennzeichnet ist, dass**
(f) die grobmaschige Materialbahn (S) so vorgeformt wird, dass sie eine geringere Dicke als die Trägermaterialbahn (4a) aufweist;
(g) die vorgeformte grobmaschige Materialbahn (S) in exzentrischer Weise in Richtung zur einen Fläche der Trägermaterialbahn (4a) hin vorgesehen wird; und
(h) die Hakenelemente (4b) aus den Hakenelement ausbildenden Hohlräumen (5) herausgezogen werden.

8. Verfahren zur Fertigung eines formgegossenen Flächenhaftverschlusses nach Anspruch 7, wobei das Verfahren **dadurch gekennzeichnet ist, dass** die Kühleinrichtung im Matrizenrad (2) so angebracht ist, dass die Umfangsfläche des Matrizenrades (2) gekühlt wird.

9. Verfahren zur Fertigung eines formgegossenen Flächenhaftverschlusses nach Anspruch 7, wobei das Verfahren **dadurch gekennzeichnet ist, dass** es weiter den Schritt aufweist, bei dem ein Teil des Matrizenrades (2) und der Flächenhaftverschluss, welcher sich der Drehung des Matrizenrades (2) folgend bewegt, in einem Kühlwassertank (10) gekühlt werden, während sie gleichzeitig diesen Tank (10) durchlaufen.

10. Verfahren zur kontinuierlichen Fertigung eines formgegossenen Flächenhaftverschlusses, welcher aus einer plattenartigen Trägermaterialbahn (4a) und einer Vielzahl von Hakenelementen (4b) besteht, die auf der einen Fläche einer Trägermaterialbahn (4a) stehen, wobei ein Matrizenrad (2) auf seiner Umfangsfläche eine Vielzahl von Hakenelement ausbildenden Hohlräumen (5) aufweist, und das Verfahren folgende Schritte umfasst:
(a) Antreiben des Matrizenrades (2) und einer Druckwalze (13), welches dem Matrizenrad mit einem vorbestimmten Spalt zwischen diesen gegenüberliegt, und zwar für ein Drehen in entgegengesetzten Richtungen;
(b) kontinuierliches Einspritzen von formgegossenem Kunstharz (4) aus einer Extrudierdüse (11) in den Zwischenraum zwischen dem Matrizenrad (2) und der Druckwalze (13);
(c) kontinuierliches Einführen eines grobmaschigen Bahnmaterials (S), um die grobmaschige Materialbahn (S) in das geschmolzene Kunstharz (4) einzubetten und die Hakenelement ausbildenden Hohlräume (5) mit einem Teil des geschmolzenen Kunstharzes (4) durch die grobmaschige Materialbahn (S) hindurch zu füllen, um den formgegossenen Flächenhaftverschluss formzugießen;
(d) Zwangskühlen der Umfangsfläche des Matrizenrades (2) durch eine Kühleinrichtung, um den formgegossenen Flächenhaftverschluss zu kühlen; und
(e) kontinuierliches Abwickeln des abgekühlten formgegossenen Flächenhaftverschlusses von der Umfangsfläche des Matrizenrades (2), indem die Hakenelemente (4b) aus den Hakenelement ausbildenden Hohlräumen (5) gezogen werden
wobei das Verfahren **dadurch gekennzeichnet ist, dass**
(f) die grobmaschige Materialbahn (S) so vorgeformt wird, dass sie eine geringere Dicke als die Trägermaterialbahn (4a) aufweist;
(g) die vorgeformte grobmaschige Materialbahn (S) in einen Spalt zwischen dem Matrizenrad (2) und dem aus der Extrudierdüse (11) extrudierten geschmolzenen Harz (4) eingeführt wird; und
(h) die vorgeformte grobmaschige Materialbahn (S) in exzentrischer Weise in Richtung zur einen Fläche der Trägermaterialbahn (4a) hin zugeführt wird.

11. Verfahren zur Fertigung eines formgegossenen Flächenhaftverschlusses nach Anspruch 10, wobei das Verfahren **dadurch gekennzeichnet ist, dass** die Kühleinrichtung im Matrizenrad (2) so angebracht ist, dass die Umfangsfläche des Matrizenrades (2) gekühlt wird.

## Revendications

1. Fermeture saillante moulée en résine synthétique, comprenant :
(a) une couche de substrat (4a) analogue à une plaque ; et
(b) un grand nombre d'éléments formant crochets (4b) se tenant sur une première surface de ladite couche de substrat (4a) analogue à une plaque, et
(c) une couche (S) à mailles grossières moulées et intégrées par extrusion ou injection continue dans ladite couche de substrat (4a) analogue à une plaque,
ladite fermeture saillante moulée étant **caractérisée en ce que** ladite couche préformée (S) à mailles grossières a une épaisseur inférieure à celle de la couche de substrat (4a) et ladite couche (S) à mailles grossières est intégrée sensiblement sur toute la surface de manière excentrée vers ladite première surface de ladite couche de substrat (4a) analogue à une plaque.

2. Fermeture saillante moulée selon la revendication 1, ladite fermeture saillante étant **caractérisée en ce que** ladite couche (S) à mailles grossières est une couche tissée ou non-tissée.

3. Fermeture saillante moulée selon la revendication 1, ladite fermeture saillante étant **caractérisée en ce que** ladite couche (S) à mailles grossières est une couche non-tissée.

4. Fermeture saillante moulée selon la revendication 1, ladite fermeture saillante étant **caractérisée en ce que** ladite couche (S) à mailles grossières est un treillis métallique.

5. Fermeture saillante moulée selon la revendication 1, ladite fermeture saillante étant **caractérisée en ce que** ladite couche (S) à grosses mailles comporte des poils (n) saillants sur sa surface et pénétrant partiellement dans lesdits éléments formant crochets (4b).

6. Fermeture saillante moulée selon la revendication 1, ladite fermeture saillante étant **caractérisée en ce que** ladite couche (S) à grosses mailles est en couleur et/ou à motif.

7. Procédé pour fabriquer de façon continue une fermeture saillante moulée, composée d'une couche de substrat (4a) analogue à une plaque et d'un grand nombre d'éléments formant crochets (4b) se tenant sur une première surface d'une couche de substrat (4a), sur une surface périphérique d'une roue (2) de moule ayant sur sa surface périphérique un grand nombre de cavités (5) de formation de crochets, comprenant les étapes consistant à :
(a) entraîner la roue (2) de moule pour qu'elle tourne dans un seul sens ;
(b) injecter de manière continue de la résine en fusion (4) provenant d'une sortie (1d) de résine fondue d'un moule d'injection (1), qui est en regard de la roue (2) de moule avec un espace prédéterminé entre eux, sur une largeur prédéterminée par rapport à la surface périphérique de la roue (2) de moule ;
(c) introduire de manière continue une couche (S) à mailles grossières dans ledit intervalle entre la roue (2) de moule et la sortie (1d) de résine fondue du moule d'injection (11) pour noyer la couche (S) à mailles grossières dans la résine fondue (4) injectée depuis le moule d'injection (1) et pour remplir les cavités (5) de formation de crochets avec une partie de la résine fondue (4) à travers la couche (S) à grosses mailles afin de former la fermeture saillante moulée:
(d) refroidir directement la surface périphérique de la roue (2) de moule par un moyen de refroidissement pour refroidir la fermeture saillante moulée ; et
(e) intercepter de façon continue la fermeture saillante moulée refroidie arrivant de la surface périphérique de la roue (2) de moule ;
ledit procédé étant **caractérisé par** les étapes consistant à :
(f) préformer ladite couche (S) à mailles grossières de façon que son épaisseur soit inférieure à celle de ladite couche de substrat (4a) ;
(g) réaliser ladite couche (S) préforrhée à mailles grossières de manière excentrée vers ladite première surface de ladite couche de substrat (4a) ; et
(h) extraire lesdits éléments formant crochets (4b) desdites cavités (5) de formation de crochets.

8. Procédé de fabrication de fermeture saillante moulée selon la revendication 7, ledit procédé étant **caractérisé en ce que** ledit moyen de refroidissement est monté dans la roue (2) de moule afin de refroidir la surface périphérique de la roue (2) de moule.

9. Procédé de fabrication de fermeture saillante moulée selon la revendication 7, ledit procédé étant **caractérisé en ce qu'**il comprend en outre l'étape consistant à refroidir une partie de la roue (2) de moule et la fermeture saillante défilant à la suite de la rotation de la roue (2) de moule dans un bac (10) d'eau de refroidissement au fur et à mesure qu'elles passent simultanément dans ledit bac (10).

10. Procédé pour fabriquer de façon continue une fermeture saillante moulée, composée d'une couche de substrat (4a) analogue à une plaque et d'un grand nombre d'éléments formant crochets (4b) se tenant sur une première surface de la couche de substrat (4a) analogue à une plaque, sur une surface périphérique d'une roue (2) de moule ayant sur sa surface périphérique un grand nombre de cavités (5) de formation de crochets, ledit procédé comprenant les étapes consistant à :
(a) faire tourner dans des directions opposées la roue (2) de moule et un cylindre d'appui (13) qui se trouve en regard de la roue (2) de moule avec un intervalle prédéterminé entre eux ;
(b) extruder de manière continue de la résine fondue (4) depuis une buse d'extrusion (11) dans l'espace entre la roue (2) de moule et le cylindre d'appui (13) ;
(c) introduire de façon continue une couche (S) à mailles grossières afin de noyer la couche (S) à mailles grossières dans la résine fondue (4) et de remplir les cavités (5) de formation de crochets avec une partie de la résine fondue (4) à travers la couche (S) à mailles grossières afin de former la fermeture saillante moulée ;
(d) refroidir directement la surface périphérique de la roue (2) de moule à l'aide d'un moyen de refroidissement pour refroidir la fermeture saillante moulée, et
(e) intercepter de façon continue la fermeture saillante moulée refroidie provenant de la surface périphérique de la roue (2) de moule en extrayant lesdits éléments formant crochets (4b) desdites cavités (5) de formation de crochets,
ledit procédé étant **caractérisé par** les étapes consistant à :
(f) préformer ladite couche (S) à mailles grossières de façon que son épaisseur soit inférieure à celle de ladite couche de substrat (4a) ;
(g) introduire ladite couche (S) préformée à mailles grossières dans un intervalle entre la roue (2) de moule et la résine fondue (4) extrudée depuis la buse d'extrusion (11) ;
(h) réaliser ladite couche (S) préformée à mailles grossières de manière excentrée vers ladite première surface de ladite couche de substrat (4a).

11. Procédé de fabrication de fermeture saillante moulée selon la revendication 10, ledit procédé étant **caractérisé en ce que** ledit moyen de refroidissement est monté dans la roue (2) de moule afin de refroidir la surface périphérique de la roue (2) de moule.
